(19) **Europäisches Patentamt / European Patent Office / Office européen des brevets**

(11) **EP 2 141 579 A1**

(12) **EUROPEAN PATENT APPLICATION**

(43) Date of publication:
06.01.2010 Bulletin 2010/01

(51) Int Cl.:
*G06F 3/048* (2006.01)   *G06F 21/00* (2006.01)

(21) Application number: 08159284.2

(22) Date of filing: 27.06.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: **National Institute Of Information
And Communication Technology**
**Tokyo 184-8795 (JP)**

(72) Inventor: **Sekiguchi, Hidenori**
**Tokyo Tokyo 184-8795 (JP)**

(74) Representative: **Epping - Hermann - Fischer**
**Patentanwaltsgesellschaft mbH**
**Ridlerstrasse 55**
**80339 München (DE)**

(54) **Item display device, item display method, and computer-readable information recording medium for preventing electromagnetic wave leakage of displayed information**

(57)    An item display device displays numeric buttons (102) on a screen (101) using an ordinary format (a), but a numeric button (102) that has been operated by a user is temporarily highlighted.

When reverting to ordinary display after a fixed amount of time has elapsed, the device first displays all numeric buttons (102) using an intermediate format (b), then highlights the operated numeric button (102), while displaying the other numeric buttons (102) using the ordinary format (c). All numeric buttons (102) are again displayed using the intermediate format (d), and then all numeric buttons (102) are reverted to ordinary display (e). Moreover, a difference in the numeric button display colors between the ordinary display and the intermediate format is equal to a difference in the numeric button display colors between the highlighted display and the intermediate format. In so doing, snooping by detection of intensity differences in electromagnetic waves leaking from the screen display is prevented.

FIG.3A

FIG.3B

## FIG.3C

## FIG.3D

## FIG.3E

**Description**

The present invention relates to an item display device and an item display method, as well as a computer-readable information recording medium upon which is recorded a program for executing the same on a computer, being suitable for preventing as much as possible the leakage of input content from electromagnetic waves generated at a screen display when inputting information, such as a personal identification number (PIN) or password, whose secrecy should be maintained.

In the related art, technology has been proposed for an auto teller machine (ATM) or an electronic voting machine, wherein information that is desired to be kept secret, such as a PIN, password, or selected item, is input by operating input buttons upon a touch panel.

For example, in certain ATMs, a technique is used wherein numeric buttons 0 through 9 and a display area showing how many digits of a PIN have been entered are displayed on a screen, and wherein the color of a displayed button (the character color, the background color, etc.) is changed and highlighted when a user touches that button, thereby allowing the user to confirm which buttons have been pressed. Additionally, an asterisk (*) or similar character is displayed in the display area for each character that has been input.

Meanwhile, in the world there presently exists an illegal behavior wherein an image being displayed on a display device such as a monitor is stolen by obtaining the electromagnetic waves emanating or leaking from the display device.

As a hardware-based countermeasure for preventing such information leakage, techniques have been considered wherein various shields are provided for reducing leaking electromagnetic waves. However, software-based technology also exists, such as that disclosed by H. Tanaka et al. (H. Tanaka, O. Takizawa and A. Yamamura, "Evaluation and Improvement of the Tempest Fonts," Information Security Applications, 5th International Workshop (WISA 2004), Lecture Notes in Computer Science, vol. 3325, pp. 457-469, Springer-Verlag, Aug. 2004).

In the technology disclosed by H. Tanaka et al., image processing is performed on the shapes of the characters used in the display device. By thus lowering the visibility of the character images from leaked electromagnetic waves, information leakage is prevented.

However, the above technology makes no consideration for the case of devices such as ATMs, wherein the displayed color of a character or the background color of a character, and not the type or shape of the displayed character, changes as a result of a user operation. Consequently, there is a strong demand for technology that prevents information leakage and that is also applicable to cases such as the above.

The present invention, being devised in order to solve problems such as the above, has an object to provide an item display device and an item display method, as well as a computer-readable information recording medium upon which is recorded a program for executing the same on a computer, being suitable for preventing as much as possible the leakage of input content from electromagnetic waves generated at a screen display when inputting information, such as a PIN or password, whose secrecy should be maintained.

In order to achieve the above object, the following aspects in accordance with the principle of the present invention are disclosed herein.

An item display device (601) in accordance with a first aspect of the present invention is provided with a memory unit (602), a receiving unit (603), a display unit (604), and an update unit (605), and is configured as follows.

More specifically, the memory unit (602) stores information specifying, for each of a plurality of items to be displayed on a screen, whether the item is to be displayed using a first or a second format.

Meanwhile, the receiving unit (603) receives command input that changes the format stored for any one of the plurality of items to a format different from the format currently being stored therefor.

In addition, the display unit (604) displays, on the screen, each of the plurality of items.

Additionally, the update unit (605) conducts an update in the memory unit (602), wherein the item specified in the command input is specified to be displayed with the specified post-change format.

Herein, the display unit (604) uses a first color, a second color, as well as a third color that is equally different from both the first color and the second color, to conduct the following:

(a) until the command input is received, each of the plurality of items is respectively displayed on the screen using the first color for items stored in the memory unit to be displayed using the first format, and using the second color for items stored in the memory unit to be displayed using the second format; and
(b) upon receiving the command input, each of the plurality of items is respectively displayed on the screen using the third color. Subsequently, among the plurality of items,
(p) items specified in the command input are displayed on the screen based on the post-change format specified in the command input, wherein the first color is used if the first format is specified, and the second color is used if the second format is specified, and
(q) each item not specified in the command input is respectively displayed on the screen using the first color for items stored in the memory unit to be displayed using the first format, and using the second color for items stored in the memory unit to be displayed using the second format.

In addition, the item display device (601) of the present invention may also be configured to display items on the screen in the following way. For each of the plurality of items, the display unit (604) respectively displays, on the screen, a character or graphic that expresses the meaning of that item, wherein the color of an item area surrounding the character or graphic is displayed using the first, second, or third color.

In addition, in the item display device (601) of the present invention, the colors used in the display unit (604) to display an item may also be configured such that the magnitude of the change in the intensity of a leaking electromagnetic wave when changing from the first color to the third color is nearly identical to the magnitude of the change in the intensity of a leaking electromagnetic wave when changing second color to the third color.

In addition, in the item display device (601) of the present invention, RGB values of the third color may also be configured to be averages of RGB values of the first color and the second color.

In addition, in the item display device (601) of the present invention, differences between the RGB values of the third color and the first color may be configured to be equal to differences between the RGB values of the third color and the second color.

In addition, in the item display device of the present invention, the receiving unit (603) may also be configured so as to

(x) receive a first command input that specifies an item whose display format is to be changed to a format different from the currently stored format therefor, the item being specified by a pressing operation conducted via a touch panel disposed overlapping the screen or a mouse that specifies a position within the screen, and

(y) receive a second command input that specifies that the display format of the item specified by the pressing operation is to be changed to a format different from the currently stored format therefor, the item being specified as a result of a predetermined delay time elapsing since the pressing operation, or alternatively, by a release operation corresponding to the pressing operation.

In addition, the item display device (601) of the present invention may also be configured such that the plurality of items are a plurality of items expressing the numerals 0 through 9, the pressing operation specifies each digit of a PIN, and the number of items to be displayed using the second format as stored in the memory unit (602) is either 0 or 1.

In addition, the item display device (601) of the present invention may also be configured such that the plurality of items is a plurality of items expressing alphanumeric characters, the pressing operation specifies each character of a password, and the number of items to be displayed using the second format as stored in the memory unit (602) is either 0 or 1.

An item display method in accordance with another aspect of the present invention uses a memory unit (602) to store information regarding each of a plurality of items to be displayed on a screen, the information indicating whether to display the item using either a first or a second format. The item display method includes a step of receiving, a step of displaying, and a step of updating, and is configured as follows.

More specifically, in the step of receiving, command input is received that changes a format stored for any one of the plurality of items to a format different from the format currently being stored therefor.

Meanwhile, in the step of displaying, each of the plurality of items is displayed on the screen.

Additionally, in the step of updating, an update is conducted in the memory unit, wherein the item specified in the command input is specified to be displayed with the specified post-change format.

Herein, in the step of displaying, a first color, a second color, as well as a third color that is equally different from both the first color and the second color, are used to conduct the following:

(a) until the command input is received, each of the plurality of items is respectively displayed on the screen using the first color for items stored in the memory unit to be displayed using the first format, and using the second color for items stored in the memory unit to be displayed using the second format; and

(b) upon receiving the command input, each of the plurality of items is respectively displayed on the screen using the third color. Subsequently, among the plurality of items,

(p) items specified in the command input are displayed on the screen based on the post-change format specified in the command input, wherein the first color is used if the first format is specified, and the second color is used if the second format is specified, and

(q) each item not specified in the command input is respectively displayed on the screen using the first color for items stored in the memory unit to be displayed using the first format, and using the second color for items stored in the memory unit to be displayed using the second format.

In addition, the item display method of the present invention may also be configured such that items are displayed on the screen in the following way. In the step of displaying, for each of the plurality of items, a character or graphic that expresses the meaning of that item is respectively displayed on the screen, wherein the color of an item area surrounding the character or graphic is displayed using the first, second, or third color.

In addition, in the item display method of the present invention, the colors used in the step of displaying to display an item may also be configured such that the magnitude of the change in the intensity of a leaking electromagnetic wave when changing from the first color to the third color is nearly identical to the magnitude of the change in the intensity of a leaking electromagnetic wave when changing second color to the third color.

In addition, in the item display method of the present invention, RGB values of the third color may also be configured to be averages of the RGB values of the first color and the second color.

In addition, in the item display method of the present invention, differences between the RGB values of the third color and the first color may be configured to be equal to differences between the RGB values of the third color and the second color.

In addition, in the item display method of the present invention, the step of receiving may also be configured such that

(x) a first command input is received that specifies an item whose display format is to be changed to a format different from the currently stored format therefor, the item being specified by a pressing operation conducted via a touch panel disposed overlapping the screen or a mouse that specifies a position within the screen, and

(y) a second command input is received that specifies that the display format of the item specified by the pressing operation is to be changed to a format different from the currently stored format therefor, the item being specified as a result of a predetermined delay time elapsing since the pressing operation, or alternatively, by a release operation corresponding to the pressing operation.

In addition, the item display method of the present invention may also be configured such that the plurality of items are a plurality of items expressing the numerals 0 through 9, the pressing operation specifies each digit of a PIN, and the number of items to be displayed using the second format as stored in the memory unit (602) is either 0 or 1.

In addition, the item display method of the present invention may also be configured such that the plurality of items are a plurality of items expressing alphanumeric characters, the pressing operation specifies each character of a password, and the number of items to be displayed using the second format as stored in the memory unit is either 0 or 1.

A computer-readable information recording medium having program in accordance with another aspect of the present invention is configured to control a computer to function as the respective units in the above item display device, and to control the computer to execute the respective steps of the above item display method.

The program may be recorded upon a computer-readable information recording medium (including compact discs, flexible disks, hard disks, magneto-optical disks, digital video discs, magnetic tapes, and semiconductor memories).

Additionally, the above information recording medium may be distributed or sold independently of a computer, or the above program itself may be distributed or sold via a computer communications network such as the Internet.

According to the present invention, there are provided an item display device and an item display method, as well as a computer-readable information recording medium upon which is recorded a program for executing the same on a computer, being suitable for preventing, as much as possible, the leakage of input content from electromagnetic waves generated at a screen display when inputting information, such as a PIN or password, whose secrecy should be maintained.

These obj ects and other obj ects and advantages of the present invention will become more apparent upon reading of the following detailed description and the accompanying drawings in which:

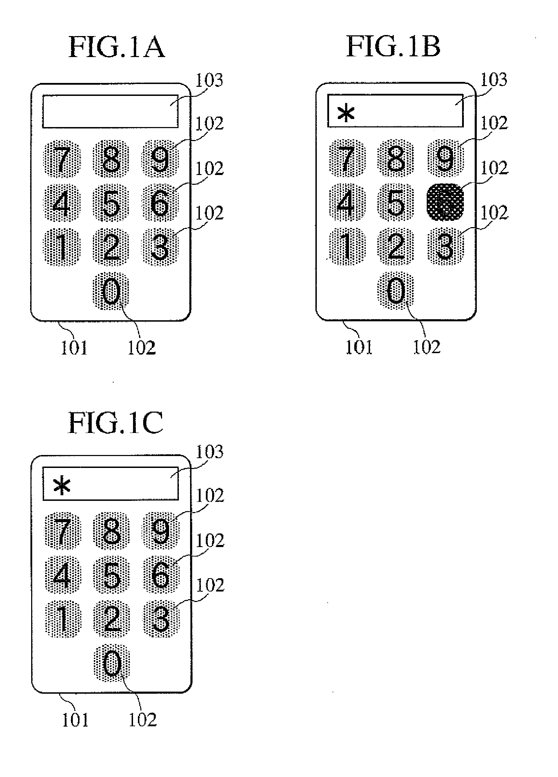

FIG. 1 is an explanatory diagram showing how a screen changes when inputting a PIN in accordance with the related art, FIG. 1A showing the state wherein a PIN has not been input, FIG. 1B showing the state immediately after the first digit of the PIN has been pressed, and FIG. 1C showing the state after pressing the first digit of the PIN, wherein the next digit has not been input;

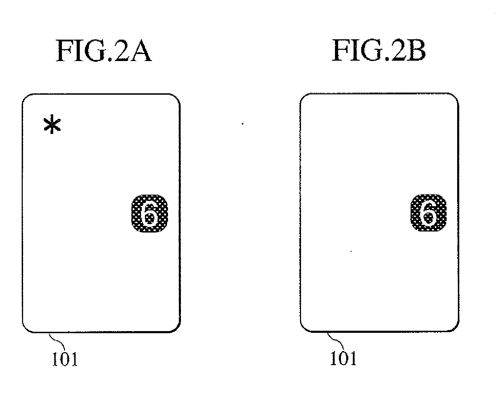

FIG. 2 is an explanatory diagram showing the nature of the difference with respect to FIG. 1, FIG. 2A showing the difference between FIGS. 1A and 1B, and FIG. 2B showing the difference between FIGS. 1B and 1C;

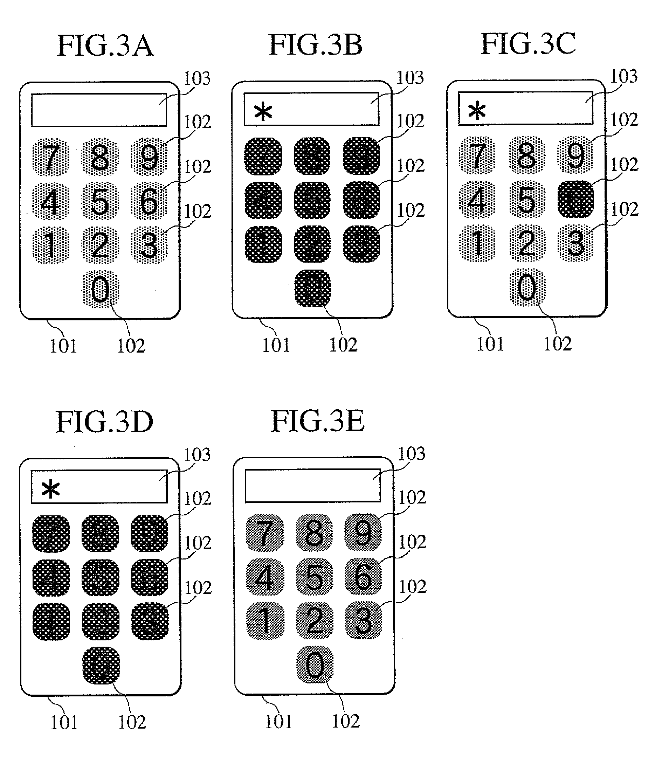

FIG. 3 is an explanatory diagram showing how a screen changes when inputting a PIN in accordance with an embodiment of the present invention, FIG. 3A showing the initial state wherein nothing has been pressed, FIG. 3B showing the state immediately after a number for one of the digits has been pressed, FIG. 3C showing the state following that of FIG. 3B, FIG. 3D showing the state following that of FIG. 3C, and the FIG. 3E showing the state following that of FIG. 3D wherein the next digit has not been input;

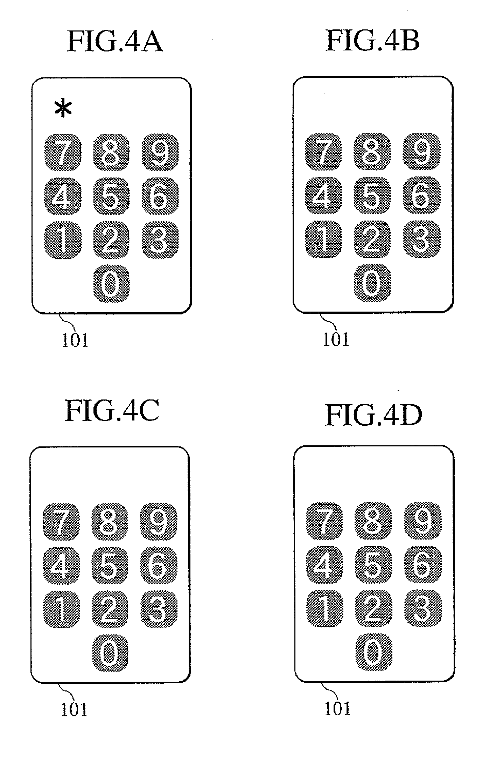

FIG. 4 is an explanatory diagram showing the nature of the difference with respect to FIG. 3, FIG. 4A showing the difference between FIGS. 3A and 3B, FIG. 4B showing the difference between FIGS. 3B and 3C, FIG. 4C showing the difference between FIGS. 3C and 3D, and FIG. 4D showing the difference between FIGS. 3D and 3E;

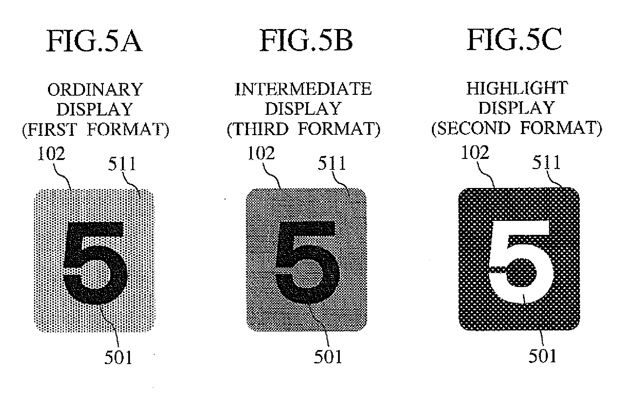

FIG. 5 is an explanatory diagram showing exemplary displays of an item display device in accordance with an embodiment of the present invention, FIG. 5A showing an example of an ordinary display (i.e., first format), FIG. 5B showing an example of an intermediate display (i.e., third format), and FIG. 5C showing an example of a highlighted display (i.e., second format);

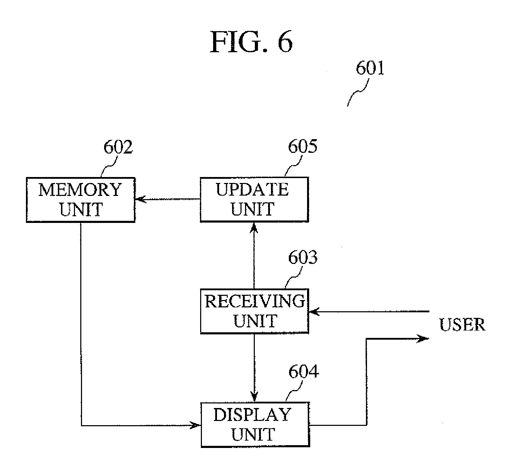

FIG. 6 is an explanatory diagram showing the diagrammatic configuration of an embodiment of the item display device of the present invention; and

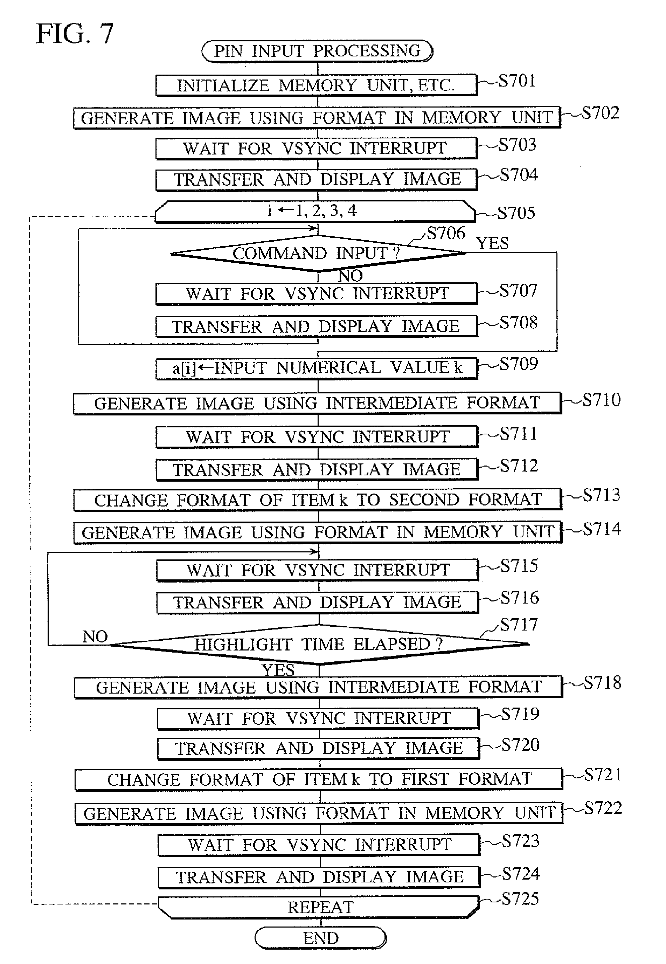

FIG. 7 is an explanatory diagram showing the process flow in the case where the item display device of the present embodiment is applied to a process whereby a four-digit PIN is input.

Hereinafter, embodiments of the present invention will be described. It should be appreciated that the embodiments described hereinafter are for the purpose of explanation, and do not limit the scope of the present invention. Thus, although it is possible for those ordinarily skilled in the art to adopt embodiments wherein some or all of the elements described hereinafter have been replaced by respective equivalents, such embodiments are also to be included within the scope of the present invention.

First Embodiment

In the following, first a simple explanation will be given of a technique used to perform unauthorized snooping of a screen display from the intensity of electromagnetic waves leaking from a display device.

FIG. 1 is an explanatory diagram showing how a screen changes when inputting a PIN in accordance with the related art. The description hereinafter will refer to FIG. 1.

FIG. 1A shows the state wherein no digits of the PIN have been input. On a screen 101, ten numeric buttons 102, 0 through 9, are displayed. In FIG. 1A, the overall color of the screen 101 is drawn as being white, while in the numeric buttons 102, the color of the numerals is shown as being black and the numeral backgrounds are shown as being light gray. However, in an actual screen display, arbitrary colors may be adopted according to the design thereof. In addition, nothing is shown in a digit display area 103 for displaying the number of digits of the PIN that have already been input.

In the case where a touch panel is used, operation of the screen display is conducted as a result of a user directly touching the screen 101. However, a technique may also be adopted wherein a separate keyboard is provided, and the state of input operations made using the keyboard is made to appear on the screen 101.

FIG. 1B shows the state immediately after the user has pressed the numeric button 102 for the numeral 6 as the first digit of a PIN. In order to allow the user to confirm that the numeric button 102 for the numeral 6 has been pressed, the button is highlighted, with the background color of the numeric button 102 for the numeral 6 being displayed as dark gray. In the digit display area 103, an asterisk (*) is added, the asterisk indicating that one digit has been input.

FIG. 1C shows the state after pressing the numeric button 102 for the numeral 6 at a time wherein the next numeric button 102 has not been pressed. In this state, the following conditions are possible, depending on the configuration of the display:

(1) a condition wherein a fixed amount of time elapses while the numeric button 102 for the numeral 6 (being the first digit of a PIN) is being pressed. The button is highlighted for the fixed amount of time only.

(2) a condition wherein the numeric button 102 for the numeral 6 (being the first digit of a PIN) is first pressed and released. The numeric button 102 is highlighted only as long as it is being pressed.

In this case, the background color of the numeric button 102 for the numeral 6 returns to the original light gray, and a single asterisk (*) is displayed in the digit display area 103, the asterisk indicating that one digit has been input.

In this way, when inputting a PIN, an item selected by the user is highlighted either momentarily or while the user is selecting the item, and additionally, a short sound is generated to match the input. In so doing, the machine indicates that the input has been received, and allows the user to confirm the input. This technique is widely used.

In order to display a screen on a display device such as a CRT (cathode ray tube) or LCD (liquid crystal display), an electron beam scans the entire screen, or a voltage applied to the electronic elements that constitute each pixel scans the entire screen. Moreover, the scanning period is a VSYNC (vertical synchronization) interrupt period, typically having a length of approximately 1/60 second.

Consequently, the fundamental period of the electromagnetic waves leaking from the display device is also approximately 1/60 second.

Persons trying to perform unauthorized snooping of the state displayed on a display device commonly use a technique wherein electromagnetic wave intensity near the display device is recorded, the time series of the electromagnetic wave intensity is divided for every instance of the above fundamental period, difference is taken between the previous and current periods, and then the difference is examined to discover which portion of the screen had a change in color. With this technique, although there is practically no snooping when there is no change in the screen display, if the color of an item changes upon being operated by the user as described above, that change is detected.

FIG. 2 is an explanatory diagram showing the nature of the difference with respect to FIG. 1. The description hereinafter will refer to FIG. 2.

It is typical to consider the magnitude of the difference in electromagnetic wave intensities measured by a snooper using the above technique (i.e., an absolute value of the difference between the electromagnetic wave intensity for one time point and the electromagnetic intensity for the subsequent time point) . In the transition from FIG. 1A to FIG. 1B, the background color of the numeric button 102 for the numeral 6 changes from light gray to dark gray, and the color of the portion corresponding to the asterisk (*) in the digit display area 103 changes from white to black. Consequently, the difference in electromagnetic wave intensities, if noise is ignored, can be thought of as being like that shown in FIG. 2A.

In addition, in the transition from FIG. 1B to 1C, only the background color of the numeric button 102 for the numeral 6 is changed from dark gray to light gray. Consequently, the difference in electromagnetic wave intensities, if noise is ignored, can be thought of as being like that shown in FIG. 2B.

In addition, it can be assumed that the snooper is unable to obtain any information while the state in FIG. 1A is displayed continually without change, while the state in FIG. 1B is displayed continually without change, and while the state in FIG. 1C is displayed continually without change.

As can be seen from FIGS. 2A and 2B, from the magnitude of the difference in electro magnetic wave intensities, the snooper is able to know that the display color of the numeric button 102 for the numeral 6 changed, and in addition, that the display color of the portion corresponding to the asterisk (*) in the digit display area 103 changed. This is due to the fact that there is no change in the display colors of the numeric buttons 102 for the numerals other than 6.

Consequently, a technique like the following is used in the present invention in order to elicit change in the display colors of the numeric buttons 102 for the numerals other than 6. FIG. 3 is an explanatory diagram showing how a screen changes when inputting a PIN in accordance with the technique of the present invention. The following stages (a) to (e) respectively correspond to FIGS. 3A to 3E.

(a) Initially, the background colors of the numeric buttons 102 for all of the numerals 0 through 9 are light gray (first color).
(b) Upon detecting that the user has pressed the numeric button 102 for the numeral 6, the background colors of the numeric buttons 102 for all of the numerals 0 through 9 are temporarily changed to an intermediate color (third color) between light gray (first color) and dark gray (second color).
(c) Subsequently, the background color of the numeric button 102 for the numeral 6 is changed to dark gray (second color), while simultaneously the background colors of the numeric buttons 102 for the numerals other than 6 are changed to light gray (first color) .
(d) Subsequently, the background colors of the numeric buttons 102 for all of the numerals 0 through 9 are temporarily changed to the intermediate color (third color) between light gray (first color) and dark gray (second color) .
(e) Finally, the background colors of all the numeric buttons 102 are reverted to light gray (first color).

By following a procedure like the above, the numeric button 102 for the numeral 6 is highlighted, while the colors also change for all of the numeric buttons 102.

FIG. 4 is an explanatory diagram showing the nature of the difference with respect to FIG. 3. The description hereinafter will refer to FIG. 4.

FIG. 4A shows the difference between FIG. 3A and FIG. 3B, wherein all of the numeric buttons 102 are detected equally. In addition, the asterisk (*) in the digit display area is also detected.

FIG. 4B shows the difference between FIG. 3B and FIG. 3C. The color of the numeric button 102 for the numeral 6 has changed from the intermediate color to dark gray, while the colors of the other numeric buttons 102 have reverted to light gray from the intermediate color. However, if the intermediate color is suitably determined, the difference between these changes becomes equal. Consequently, all of numeric buttons 102 are also detected equally in FIG. 4B.

FIG. 4C shows the difference between FIG. 3C and FIG. 3D. The color of the numeric button 102 for the numeral 6 has changed from dark gray to the intermediate color, while the colors of the other numeric buttons 102 have changed from light gray to the intermediate color. However, if the intermediate color is suitably determined, the difference between these changes becomes equal. Consequently, all of numeric buttons 102 are also detected equally in FIG. 4C.

FIG. 4D shows the difference between FIG. 3D and FIG. 3E. Since the colors of all of the numeric buttons 102 have reverted to light gray from the intermediate color, all of the numeric buttons 102 are also detected equally in FIG. 4D.

Consequently, it becomes difficult for the snooper to detect which numeric button 102 was operated for input.

The intermediate color (third color) adopts a color that is between the ordinary display color (first color) and the highlighted display color (second color). At this point, an intermediate color whereby the absolute value of the difference in leaked electromagnetic wave intensities becomes nearly equal may be determined by experiments, or more simply, by taking the respective averages of the first color and the second color for each of the three component RGB values thereof.

It is also possible to select an intermediate color by considering the difference (distance) between one color and another color in ways other than the above, such that the difference between the intermediate color (third color) and the ordinary display color (first color) becomes equal to the difference between the intermediate color (third color) and the highlighted display color (second color). For example, values such as

(1) the square root of the sum of the squares of the differences in the respective RGB values,
(2) the sum of the absolute values of the differences in the respective RGB values,
(3) the difference between the square roots of the sums of the squares of the respective RGB values, and
(4) the difference between the sums of the absolute values of the respective RGB values may also be adapted.

In other words, although the third color is referred to herein as the "intermediate color," the third color is not necessarily limited to being a mixture of the first color and the second color, and instead refers to any color such that the distance between the first color and the third color is in some meaning equal to the distance between the second color and the third color. Obviously, it is typically possible to use the "intermediate color" as the third color. Hereinafter, references to the "intermediate color" are intended to include the various conditions described above.

Moreover, it is also possible to actually use the equipment the snooper is assumed to use, and thereby determine by experiments the intermediate color whereby the numeric buttons 102 become least detectable.

Hereinafter, for the sake of simplicity in understanding, the notation C[1], C[2], ..., C'[1], C'[2], ..., etc., will be used for the colors, wherein the respective RGB components of the $i$th color C [i] are expressed using the notation C [i] .r, C[i] .g, and C[i].b. Furthermore, it is assumed that 24-bit color will be used, and thus each variable C[i].r, C[i].g, and C[i].b may take an integer value between 0 and 255.

FIG. 5 is an explanatory diagram showing display examples of an ordinary display (first format), an intermediate display (third format), and a highlighted display (second format) . The description hereinafter will refer to FIG. 5.

FIG. 5A shows a display example wherein an item of the numeric button 102 including the numeral 5 is displayed using the ordinary display (first format), and wherein a numeral portion 501 is displayed using a color C[1], while a background portion 511 is displayed using a color C'[1]. In cases such as the above wherein an item includes a character, the display color of the character itself is referred to as "foreground color", while the display color of the character background is referred to as "background color". Thus, in the ordinary display (first format), the foreground color is C[1], and the background color is C'[1].

FIG. 5B shows a display example wherein the item of the numeric button 102 including the numeral 5 is displayed using the intermediate display (third format, intermediate format). The (foreground) color of the numeral portion 501 is C[3], and the (background) color of the background portion 511 is C'[3].

FIG. 5C shows a display example wherein the item of the numeric button 102 including the numeral 5 is displayed using the highlighted display (second format). The (foreground) color of the numeral portion 501 is C[2], and the (background) color of the background portion 511 is C'[2].

In the display example in FIG. 5, each color C[i], C'[i] (i = 1, 2, or 3) is assumed to correspond to a color on the grayscale between white, gray, and black. Consequently, for each i = 1, 2, or 3, the relationship

$$C[i].r = C[i].g = C[i].b$$

$$C'[i].r = C'[i].g = C'[i].b$$

holds true.

In the present invention, the display of an item such as the numeric button 102 exhibits one of the following transitions .

(a) Ordinary display (first format) →Intermediate display (third format) → Ordinary display (first format)
(b) Ordinary display (first format) →Intermediate display (third format) → Highlighted display (second format)
(c) Highlighted display (second format) → Intermediate display (third format) →Ordinary display (first format)
(d) Highlighted display (second format) → Intermediate display (third format) →Highlighted display (second format)

Additionally, when changing the format whereby any of the numeric buttons 102 are displayed, all of the numeric buttons 102 are first simultaneously displayed using the intermediate display (third format), and then the numeric button 102 to be highlighted is displayed using the highlighted display (second format), while the numeric buttons 102 to be displayed normally are displayed using the ordinary display (first format).

In FIG. 5, the averages of the ordinary display (first format) and the highlighted display (second format) are taken to determine the foreground color C[3] and the background color C' [3] of the intermediate display (third format) . In other words,

$$C[3].r = (C[1].r + C[2].r) / 2;$$

$$C[3].g = (C[1].g + C[2].g) / 2;$$

$$C[3].b = (C[1].b + C[2].b) / 2;$$

$$C'[3].r = (C'[1].r + C'[2].r) / 2;$$

$$C'[3].g = (C'[1].g + C'[2].g) / 2;$$

$$C'[3].b = (C'[1].b + C'[2].b) / 2.$$

More specifically, colors shift from black → gray → white in the order C[1], C[3], C[2], while the gray color darkens in the order C'[1], C'[3], C'[2].

Other than the above, various definitions for the distance d(C[i], C[j]) between two certain colors C[i] and C[j] may also be adopted, like the following.

$$(1)\ d(C[i], C[j]) = (C[i].r - C[j].r)^2 + (C[i].g - C[j].g)^2 + (C[i].b - C[j].b)^2 ;$$

$$(2)\ d(C[i], C[j]) = [(C[i].r - C[j].r)^2 + (C[i].g - C[j].g)^2 + (C[i].b - C[j].b)^2]^{1/2};$$

$$(3)\ d(C[i], C[j]) = |C[i].r - C[j].r| + |C[i].g - C[j].g| + |C[i].b - C[j].b|;$$

$$(4)\ d(C[i], C[j]) = |(C[i].r^2 + C[i].g^2 + C[i].b^2) - (C[j].r^2 + C[j].g^2 + C[j].b^2)|;$$

$$(5)\ d(C[i], C[j]) = |(C[i].r + C[i].g + C[i].b) - (C[j].r + C[j].g + C[j].b)|$$

Any of the definitions may be suitably selected according to usage, the abilities/characteristics of the equipment, or the like.

Additionally, when the color distance is determined in this way, snooping is prevented as much as possible when the colors C[i],C'[i] (i = 1, 2, or 3) are configured to satisfy the following conditions:

$$d(C[3], C[1]) = d(C[3], C[2]);$$

$$d(C'[3], C'[1] = d(C'[3], C'[2]).$$

As described earlier, instead of using color distances like the above, a technique wherein colors C[i], C'[i] (i = 1, 2, or 3) that are not easily snooped are determined by experiments is also effective.

It should be appreciated that although in the foregoing description both the foreground color and the background color are changed, it is also possible to change only the background color, without changing the foreground color, and vice versa.

Hereinafter, the item display device of the present embodiment will be described in detail. FIG. 6 is an explanatory diagram showing the diagrammatic configuration of an embodiment of the item display device of the present invention. The description hereinafter will refer to FIG. 6.

An item display device 601 in accordance with the present embodiment may be configured in a computer, either by executing a program recorded on an information recording medium such as ROM (Read Only Memory), EEPROM (Electrically Erasable Programmable ROM), or a hard disk, or, by combining various electronic circuits such as a FPGA (Field Programmable Gate Array), ASIC (Application Specific Integrated Circuit), or DSP (Digital Signal Processor) . The computer also includes a variety of input and output devices such as a CPU (Central Processing Unit) and RAM (Random Access Memory), an LCD or CRT, a keyboard and mouse, and a touch panel.

The item display device 601 in accordance with the present embodiment is provided with a memory unit 602, a receiving unit 603, a display unit 604, and an update unit 605, and is configured as follows.

First, for each of a plurality of items to be displayed on the screen, the following information is stored in the memory unit 602.

(a) Information regarding a character string to be displayed as the respective item. In the case wherein numeric buttons 102 are used, this information corresponds to a respective numeral.
(b) Information regarding the format whereby the respective item is currently being displayed. There are two formats, the first format used for ordinary display and the second format used for highlighted display, the format information indicating which is being used for the respective item.
(c) The position where the respective item is to be displayed on the screen. If a display configuration like that shown in FIG. 1 is adopted, then it is possible to solve for the position by calculating from the numeral of the character string for the respective item. However, typically the position is defined in advance conforming to a screen design. Moreover, in order to further prevent snooping, a technique may also be adopted wherein item positions are randomly shuffled.

In addition to the above, information defining the respective colors C[i], C'[i] (i = 1, 2, or 3) is stored in the memory unit 602.

Thus, the RAM functions as the memory unit 602.

In addition to the above, a variety of other information is stored in the RAM, such as information on the numbers that have been input so far when inputting a PIN. For example, a four-element integer array **a** may be prepared in order to store a four-digit PIN.

FIG. 7 is an explanatory diagram showing a process flow in the case where the item display device of the present embodiment is applied to a process whereby a four-digit PIN is input. The description hereinafter will refer to FIG. 7.

When the process in FIG. 7 is started, the CPU initializes the variety of other information stored in the memory unit 602 and the RAM (step S701).

In other words, in the memory unit 602, the displayed character string and initial display position is configured for all items, while in addition the ordinary display (first format) is configured as the display format. In addition, the information defining the respective colors C[i], C'[i] (i = 1, 2, or 3) is also configured.

Among the above, while it is typical for C[i], C'[i] (i = 1 or 2) to be defined using predetermined constants, C[2] and C' [2] maybe configured using predetermined constants that satisfy the conditions described above, or C[2] and C' [2] may be solved for by calculation in the initialization stage.

In addition, each of the elements a[1], a[2], a[3], and a[4] of the integer array **a** for storing an already-input PIN is set to a value other than 0 through 9 (for example, -1), thereby indicating that input has not yet been received.

Subsequently, according to the information stored in the memory unit 602, an image to be displayed on the screen is created in an image buffer inside the RAM (step S702). After waiting until a VSYNC interrupt (step S703), the created image in the image buffer is then actually transferred to a monitor, and the image is displayed (step S704). In so doing, a screen like that shown in FIG. 3A is displayed.

In the process shown in FIG. 7, it is also possible to apply on-screen arrangement and image creation techniques for the various components of a GUI. In this case, the position in the image, format, foreground color, and colors C[1], C'[1] are referenced for each item.

Next, for each of values 1, 2, 3, and 4 of a variable i stored in RAM, the following steps are repeated in order (step S705) .

It is first checked whether or not command input exists as the result of the user using the touch panel or mouse (step S706) . If there is no command input (step S706; No), the process waits until the next VSYNC interrupt (step S707), and then actually transfers the image in the image buffer to the monitor (step S708) . The process then returns to step S706.

On the other hand, if command input does exist (step S706; Yes), then a numerical value $k$ of the numeric button 102 selected by the user in the command input is substituted for a[i] (step S709). This command input can be thought of as a command input that changes the format of the item corresponding to the numeric button 102 of numeral $k$. Consequently, the touch panel, mouse, or a similar device functions as the receiving unit 603.

Furthermore, the following processes are conducted to highlight the item of numeral $k$ stored in the memory unit 602.

Specifically, the CPU generates an image in the image buffer inside the RAM such that each respective item stored in the memory unit 602 is disposed with its position and character string in the third format (intermediate display, intermediate format) (step S710).

More specifically, for all numeric buttons 102, C[3] is adopted as the foreground color, and C'[3] is adopted as the background color thereof.

In addition, the array **a** is checked for the number of numerical values that have already been input, and a number asterisks (*) corresponding to the number of input values is made to be displayed in the digit display area 103.

Subsequently, after waiting for the next VSYNC interrupt (step S711), the image in the image buffer is actually transferred to the monitor (step S712) . In so doing, a screen like that shown in FIG. 3B is displayed.

Furthermore, the memory unit 602 is updated so as to change the format of the item of numeral $k$ to the second format (step S713).

Consequently, the CPU and RAM working in conjunction function as the update unit 605.

Additionally, an image to be displayed is created in the image buffer inside the RAM in accordance with the character string, position, format, and colors C[1], C[2], C'[1], and C'[2] for each item stored in the memory unit 602 (step S714) . After waiting until the next VSYNC interrupt (step S715), the image in the image buffer is actually transferred to the monitor (step S716). In so doing, a screen like that shown in FIG. 3C is displayed.

Subsequently, it is determined whether or not the elapsed time since obtaining the numerical value of the last command input in step S706 has exceeded a predetermined highlighted display time (step S717). If the elapsed time has not exceeded the predetermined highlighted display time (step S717; No), the process returns to step S715.

If the elapsed time has exceeded the predetermined highlighted display time (step S717; Yes), the duration of the highlighted display has ended, and thus the CPU generates an image in the image buffer inside the RAM such that each respective item stored in the memory unit 602 is disposed with its position and character string in the third format (intermediate display, intermediate format), i.e., disposed using the colors C[3] and C'[3] (step S718). After waiting until the next VSYNC interrupt (step S719), the image in the image buffer is actually transferred to the monitor (step S720). In so doing, a screen like that shown in FIG. 3D is displayed.

Subsequently, the memory unit 602 is updated such that the format of the item of numeral $k$ reverts to the first format (step S721). An image to be displayed is then generated in the image buffer inside the RAM in accordance with the character string, position, format, and colors C[1], C'[1] for each item stored in the memory unit 602 (step S722). After waiting until the next VSYNC interrupt (step S723), the image in the image buffer is actually transferred to the monitor (step S724). In so doing, a screen like that shown in FIG. 3E is displayed.

Consequently, the CPU, RAM, and monitor working in conjunction function as the display unit 604.

Additionally, the process starting from step S705 is repeated until the final digit is input (step S725).

When the repetition of steps S705 to S724 ends, the process shown in FIG. 7 is terminated. At this stage, the PIN input by the user is being stored in the array **a.**

In this way, in the present embodiment, an image in the intermediate format is generated in steps S710 and S718, and is displayed in steps S712 and S720 for one period of the VSYNC interrupt period (typically 1/60 second). However, it is also possible to suitably lengthen the display interval.

In addition, in the present embodiment, a pressed numeric button 102 is displayed highlighted for a fixed amount of time to confirm the button press, wherein command input from the user is not detected during this time. However, as described above, a control flow may also be changed so as to allow input during the highlighted display.

It should be appreciated that while in the foregoing explanation the case wherein a four-digit PIN is input was given by way of example, the present invention is similarly applicable to a variety of password input systems.

Moreover, when inputting a password or PIN, the total number of highlighted items is either zero or one. However, the principle of the present invention may also be applied to applications wherein the number of highlighted items is not thereby limited. In this case, when changing the display format of any item, a screen is first displayed wherein the display format of all items is changed temporarily to the intermediate format, and then a screen is displayed wherein items are displayed in the post-change format, being either the ordinary format or the highlighted format.

Second Embodiment

In the present embodiment, each color is selected so as to satisfy the conditions of the colors C[i], C'[i] (i = 1, 2, or 3) of the foregoing embodiment, while in addition satisfying the following condition:

$$d(C[3], C[1]) = d(C[3], C[2]) = d(C'[3], C'[1]) = d(C'[3], C'[2]).$$

When the colors C[i], C'[i] (i = 1, 2, or 3) are selected so as to satisfy the above condition, the difference in the foreground color changing among the ordinary display, the intermediate display, and the highlighted display becomes equal to the difference in the background color changing among the ordinary display, the intermediate display, and the highlighted display.

In other words, in the foregoing embodiment, the shapes of the numerals on each of the numeric buttons 102 are visible, as shown in FIG. 4, whereas in the present embodiment, if the differences are used, distinguishing the shapes of the numerals on the numeric buttons 102 is difficult.

The present embodiment is even more effective when combined with a configuration wherein the arrangement of the numeric buttons 102 is randomly changed each session. This is because it becomes more difficult to ascertain the positions of the numeric buttons 102 that the user operated, while also being difficult to ascertain the numerical values of the numeric buttons 102 displayed at each position.

Consequently, the possibility of information such as a PIN being stolen by the snooper may be further reduced.

As described in the foregoing, as a result of the present invention, an item display device and an item display method are provided, as well as a computer-readable information recording medium upon which is recorded a program for executing the same on a computer, being suitable for preventing as much as possible the leakage of input content electromagnetic waves generated at a screen display when inputting information, such as a PIN or password, whose secrecy should be maintained.

Various embodiments and changes may be made thereunto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

**Claims**

1.  An item display device (601), **characterized by** comprising:

    a memory unit (602) that stores information for each of a plurality of items to be displayed on a screen, the information indicating whether the item is to be displayed using a first or a second format;
    a receiving unit (603) that receives command input that changes the format stored for any one of the plurality of items to a format different from the format currently being stored therefor;
    a display unit (604) that displays, on the screen, the each of the plurality of items; and
    an update unit (605) that conducts an update in the memory unit (602), such that the item specified in the command input is specified to be displayed using the specified post-change format;

    wherein the display unit (604) uses a first color, a second color, as well as a third color that is equally different from both the first color and the second color, such that

(a) until the command input is received, each of the plurality of items is respectively displayed on the screen using the first color for items stored in the memory unit to be displayed using the first format, and using the second color for items stored in the memory unit to be displayed using the second format, and

(b) upon receiving the command input, each of the plurality of items is respectively displayed on the screen using the third color, and subsequently, among the plurality of items,

(p) items specified in the command input are displayed on the screen based on the post-change format specified in the command input, wherein the first color is used if the first format is specified, and the second color is used if the second format is specified, and

(q) each item not specified in the command input is respectively displayed on the screen using the first color for items stored in the memory unit to be displayed using the first format, and using the second color for items stored in the memory unit to be displayed using the second format.

2. The item display device (601) according to claim 1, **characterized in that**

for each of the plurality of items, the display unit (604) respectively displays, on the screen, a character or graphic that expresses the meaning of that item, and wherein

the color of an item area surrounding the character or graphic is displayed using the first, second, or third color.

3. The item display device according to claim 1, **characterized in that** the colors used in the display unit (604) to display an item are configured such that the magnitude of the change in the intensity of a leaking electromagnetic wave when changing from the first color to the third color is nearly identical to the magnitude of the change in the intensity of a leaking electromagnetic wave when changing from the second color to the third color.

4. The item display device (601) according to claim 1, **characterized in that** RGB values of the third color are averages of RGB values of the first color and the second color.

5. The item display device (601) according to claim 1, **characterized in that** differences between the RGB values of the third color and the first color are equal to differences between the RGB values of the third color and the second color.

6. The item display device (601) according to claim 1, **characterized in that** the receiving unit (603)

(x) receives a first command input that specifies an item whose display format is to be changed to a format different from the currently stored format therefor, the item being specified by a pressing operation conducted via a touch panel disposed overlapping the screen or a mouse that specifies a position within the screen, and

(y) receives a second command input that specifies that the display format of the item specified by the pressing operation is to be changed to a format different from the currently stored format therefor, the item being specified as a result of a predetermined delay time elapsing since the pressing operation, or alternatively, by a release operation corresponding to the pressing operation.

7. The item display device (601) according to claim 6, **characterized in that**

the plurality of items are a plurality of items expressing the numerals 0 through 9,

the pressing operation specifies each digit of a PIN, and

the number of items to be displayed using the second format as stored in the memory unit is either 0 or 1.

8. The item display device according to claim 6, **characterized in that**

the plurality of items are a plurality of items expressing alphanumeric characters,

the pressing operation specifies each character of a password, and

the number of items to be displayed using the second format as stored in the memory unit (602) is either 0 or 1.

9. An item display method that uses a memory unit (602) to store information regarding each of a plurality of items to be displayed, the information indicating whether to display the item using either a first or a second format, the method **characterized by** comprising the steps of:

receiving command input that changes the format stored for any one of the plurality of items to a format different from the format currently being stored therefor;

displaying, on a screen, the each of the plurality of items; and

conducting an update in the memory unit, wherein the item specified in the command input is specified to be displayed using the specified post-change format;

wherein, in the step of displaying, a first color, a second color, as well as a third color that is equally different from both the first color and the second color, are used such that

(a) until the command input is received, each of the plurality of items are respectively displayed on the screen using the first color for items stored in the memory unit to be displayed using the first format, and using the second color for items stored in the memory unit to be displayed using the second format, and
(b) upon receiving the command input, each of the plurality of items is respectively displayed on the screen using the third color, and subsequently, among the plurality of items,
(p) items specified in the command input are displayed on the screen based on the post-change format specified in the command input, wherein the first color is used if the first format is specified, and the second color is used if the second format is specified, and
(q) each item not specified in the command input is respectively displayed on the screen using the first color for items stored in the memory unit to be displayed using the first format, and using the second color for items stored in the memory unit to be displayed using the second format.

10. The item display method according to claim 9, **characterized in that**
in the step of displaying, for each of the plurality of items, a character or graphic that expresses the meaning of that item is respectively displayed on the screen, and wherein
the color of an item area surrounding the character or graphic is displayed using the first, second, or third color.

11. The item display method according to claim 9, wherein the colors used in the step of displaying to display an item are such that the magnitude of the change in the intensity of a leaking electromagnetic wave when changing from the first color to the third color is nearly identical to the magnitude of the change in the intensity of a leaking electromagnetic wave when changing from the second color to the third color.

12. The item display method according to claim 9, **characterized in that** RGB values of the third color are averages of RGB values of the first color and the second color.

13. The item display method according to claim 9, **characterized in that** differences between the RGB values of the third color and the first color are equal to differences between the RGB values of the third color and the second color.

14. The item display method according to claim 9, **characterized in that**, in the step of receiving,

(x) a first command input is received that specifies an item whose display format is to be changed to a format different from the currently stored format therefor, the item being specified by a pressing operation conducted via a touch panel disposed overlapping the screen or a mouse that specifies a position within the screen, and
(y) a second command input is received that specifies that the display format of the item specified by the pressing operation is to be changed to a format different from the currently stored format therefor, the item being specified as a result of a predetermined delay time elapsing since the pressing operation, or alternatively, by a release operation corresponding to the pressing operation.

15. The item display method according to claim 14, **characterized in that**
the plurality of items are a plurality of items expressing the numerals 0 through 9,
the pressing operation specifies each digit of a PIN, and
the number of items to be displayed using the second format as stored in the memory unit (602) is either 0 or 1.

16. The item display method according to claim 14, **characterized in that**
the plurality of items are a plurality of items expressing alphanumeric characters,
the pressing operation specifies each character of a password, and
the number of items to be displayed using the second format as stored in the memory unit (602) is either 0 or 1.

17. A computer-readable information recording medium having a program recorded thereon, the program **characterized by** controlling a computer to function as:

a memory unit (602) that stores information for each of a plurality of items to be displayed on a screen, the information indicating whether the item is to be displayed using a first or a second format;
a receiving unit (603) that receives command input that changes the format stored for any one of the plurality of items to a format different from the format currently being stored therefor;

a display unit (604) that displays, on the screen, the each of the plurality of items; and
an update unit (605) that conducts an update in the memory unit, such that the item specified in the command input is specified to be displayed using the specified post-change format;
wherein the program controls the computer to function such that
the display unit (604) uses a first color, a second color, as well as a third color that is equally different from both the first color and the second color, such that

(a) until the command input is received, each of the plurality of items is respectively displayed on the screen using the first color for items stored in the memory unit to be displayed using the first format, and using the second color for items stored in the memory unit to be displayed using the second format, and
(b) upon receiving the command input, each of the plurality of items is respectively displayed on the screen using the third color, and subsequently, among the plurality of items,
(p) items specified in the command input are displayed on the screen based on the post-change format specified in the command input, wherein the first color is used if the first format is specified, and the second color is used if the second format is specified, and
(q) each item not specified in the command input is respectively displayed on the screen using the first color for items stored in the memory unit to be displayed using the first format, and using the second color for items stored in the memory unit to be displayed using the second format.

18. The computer-readable information recording medium according to claim 17, **characterized in that**
for each of the plurality of items, the display unit (604) respectively displays, on the screen, a character or graphic that expresses the meaning of that item, and wherein
the color of an item area surrounding the character or graphic is displayed using the first, second, or third color.

19. The computer-readable information recording medium according to claim 17, **characterized in that** the colors used in the display unit (604) to display an item are configured such that the magnitude of the change in the intensity of a leaking electromagnetic wave when changing from the first color to the third color is nearly identical to the magnitude of the change in the intensity of a leaking electromagnetic wave when changing from the second color to the third color.

20. The computer-readable information recording medium according to claim 17, **characterized in that** RGB values of the third color are averages of RGB values of the first color and the second color.

21. The computer-readable information recording medium according to claim 17, **characterized in that** differences between the RGB values of the third color and the first color are equal to differences between the RGB values of the third color and the second color.

22. The computer-readable information recording medium according to claim 17, **characterized in that** the receiving unit (603)

(x) receives a first command input that specifies an item whose display format is to be changed to a format different from the currently stored format therefor, the item being specified by a pressing operation conducted via a touch panel disposed overlapping the screen or a mouse that specifies a position within the screen, and
(y) receives a second command input that specifies that the display format of the item specified by the pressing operation is to be changed to a format different from the currently stored format therefor, the item being specified as a result of a predetermined delay time elapsing since the pressing operation, or alternatively, by a release operation corresponding to the pressing operation.

23. The computer-readable information recording medium according to claim 22, **characterized in that**
the plurality of items are a plurality of items expressing the numerals 0 through 9,
the pressing operation specifies each digit of a PIN, and
the number of items to be displayed using the second format as stored in the memory unit (602) is either 0 or 1.

24. The computer-readable information recording medium according to claim 22, **characterized in that**
the plurality of items are a plurality of items expressing alphanumeric characters,
the pressing operation specifies each character of a password, and
the number of items to be displayed using the second format as stored in the memory unit (602) is either 0 or 1.

# FIG.1A

# FIG.1B

# FIG.1C

16

FIG.2A

FIG.2B

101

101

## FIG.3A

## FIG.3B

## FIG.3C

## FIG.3D

## FIG.3E

FIG.4A

FIG.4B

FIG.4C

FIG.4D

101

FIG.5A

ORDINARY
DISPLAY
(FIRST FORMAT)
102    511

501

FIG.5B

INTERMEDIATE
DISPLAY
(THIRD FORMAT)
102    511

501

FIG.5C

HIGHLIGHT
DISPLAY
(SECOND FORMAT)
102    511

501

# FIG. 6

## FIG. 7

```
        ( PIN INPUT PROCESSING )
                    |
    INITIALIZE MEMORY UNIT, ETC.          ~S701
                    |
 GENERATE IMAGE USING FORMAT IN MEMORY UNIT ~S702
                    |
     WAIT FOR VSYNC INTERRUPT              ~S703
                    |
    TRANSFER AND DISPLAY IMAGE             ~S704
                    |
       i ← 1, 2, 3, 4                      ~S705
                    |
                    ↓
              COMMAND INPUT ?      YES      /S706
                    | NO
     WAIT FOR VSYNC INTERRUPT              ~S707
                    |
    TRANSFER AND DISPLAY IMAGE             ~S708
                    |
    a[i] ← INPUT NUMERICAL VALUE k         ~S709
                    |
 GENERATE IMAGE USING INTERMEDIATE FORMAT  ~S710
                    |
     WAIT FOR VSYNC INTERRUPT              ~S711
                    |
    TRANSFER AND DISPLAY IMAGE             ~S712
                    |
 CHANGE FORMAT OF ITEM k TO SECOND FORMAT  ~S713
                    |
 GENERATE IMAGE USING FORMAT IN MEMORY UNIT ~S714
                    |
     WAIT FOR VSYNC INTERRUPT              ~S715
                    |
    TRANSFER AND DISPLAY IMAGE             ~S716
                    |
   NO        HIGHLIGHT TIME ELAPSED ?       /S717
                    | YES
 GENERATE IMAGE USING INTERMEDIATE FORMAT  ~S718
                    |
     WAIT FOR VSYNC INTERRUPT              ~S719
                    |
    TRANSFER AND DISPLAY IMAGE             ~S720
                    |
 CHANGE FORMAT OF ITEM k TO FIRST FORMAT   ~S721
                    |
 GENERATE IMAGE USING FORMAT IN MEMORY UNIT ~S722
                    |
     WAIT FOR VSYNC INTERRUPT              ~S723
                    |
    TRANSFER AND DISPLAY IMAGE             ~S724
                    |
             REPEAT                        ~S725
                    |
                ( END )
```

| | Europäisches Patentamt<br>European Patent Office<br>Office européen des brevets | **EUROPEAN SEARCH REPORT** | Application Number<br>EP 08 15 9284 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | GB 2 330 924 A (KUHN MARKUS GUENTHER [DE]; ANDERSON ROSS JOHN [GB])<br>5 May 1999 (1999-05-05)<br>* the whole document * | 1-24 | INV.<br>G06F3/048<br>G06F21/00 |
| D,A | HIDEMA TANAKA ET AL: "Evaluation and Improvement of the Tempest Fonts"<br>LECTURE NOTES IN COMPUTER SCIENCE, SPRINGER VERLAG, BERLIN; DE,<br>vol. 3325, 1 January 2005 (2005-01-01), pages 457-469, XP009106082<br>* the whole document * | | |
| A | MARKUS G KUHN ET AL: "Soft Tempest: Hidden Data Transmission Using Electromagnetic Emanations"<br>1 January 1998 (1998-01-01), LECTURE NOTES IN COMPUTER SCIENCE, SPRINGER VERLAG, BERLIN; DE, PAGE(S) 124 - 142 , XP009106083<br>* the whole document * | 1-24 | |
| A | ECK VAN W: "ELECTROMAGNETIC RADIATION FROM VIDEO DISPLAY UNITS: AN EAVESDROPPING RISK?"<br>1 December 1985 (1985-12-01), COMPUTERS & SECURITY, ELSEVIER SCIENCE PUBLISHERS. AMSTERDAM, NL, PAGE(S) 269 - 286 , XP000992801<br>ISSN: 0167-4048<br>* the whole document * | 1-24 | TECHNICAL FIELDS<br>SEARCHED (IPC)<br><br>G06F<br>G07F<br>G09G |

The present search report has been drawn up for all claims

| Place of search | Date of completion of the search | Examiner |
|---|---|---|
| Munich | 12 December 2008 | Quesson, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 9284

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2008

| Patent document cited in search report | | Publication date | Patent family member(s) | Publication date |
|---|---|---|---|---|
| GB 2330924 | A | 05-05-1999 | NONE | |

EPO FORM P0459

For more details about this annex : see Official Journal of the European Patent Office, No. 12/82

**EP 2 141 579 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Evaluation and Improvement of the Tempest Fonts. **H. Tanaka ; O. Takizawa ; A. Yamamura.** Information Security Applications, 5th International Workshop (WISA 2004), Lecture Notes in Computer Science. Springer-Verlag, August 2004, vol. 3325, 457-469